# FASCICULE DE BREVET EUROPEEN

(11) **EP 1 017 914 B1**
(45) Date de publication et mention de la délivrance du brevet: **08.02.2006**
(21) Numéro de dépôt: 98944904.6
(22) Date de dépôt: 21.09.1998
(51) Int. Cl.: E04H 6/00

(54) **DISPOSITIF DE STATIONNEMENT POUR CYCLES**
PARKVORRICHTUNG FÜR FAHRRÄDER
PARKING DEVICE FOR CYCLES

(30) Priorité: 19.09.1997 BE 9700763
(43) Date de publication de la demande: 12.07.2000
(73) Titulaire: Naudts, Patrick, 1000 Bruxelles (BE)
(72) Inventeur: Naudts, Patrick, 1000 Bruxelles (BE)
(74) Mandataire: Petsis, Christos
(86) Numéro de dépôt international: PCT/BE1998/000138
(87) Numéro de publication internationale: WO 1999/015745

(56) Documents cités:
- EP-A- 0 044 690
- EP-A- 0 628 614
- EP-A- 0 638 881
- EP-A- 0 659 957
- DE-A- 4 126 797
- DE-A- 4 308 760
- DE-C- 97 861
- DE-U- 9 414 993
- DE-U- 9 418 123
- DE-U- 29 520 536
- DE-U- 29 521 237
- FR-A- 2 611 791
- NL-A- 9 401 532
- US-A- 3 996 704
- US-A- 4 773 020
- PATENT ABSTRACTS OF JAPAN vol. 96, no. 6, 28 juin 1996 & JP 08 042172 A (TAKENAKA ENG KK), 13 février 1996

## Description

### Domaine de l'invention

La présente invention se rapporte à un dispositif de stationnement pour cycles, en particulier destiné à des bicyclettes, vélomoteurs, cyclomoteur, et analogues comprenant au moins une série d'éléments de stationnement. Ladite série d'éléments est constituée d'éléments de stationnement mutuellement adjacents. Chaque élément de stationnement comprend un espace barré prévu pour recevoir individuellement un deux-roues unique par une ouverture d'accès, de façon à former des cellules de stationnement individuelles pour les deux-roues précités qui soient mutuellement isolées. Un moyen de fermeture est prévu pour chaque cellule permettant de barrer l'espace que celle-ci renferme. Les cellules de stationnement précitées sont disposées suivant une première et une deuxième série d'éléments de stationnement mutuellement décalées avec agencement alterné des éléments appartenant aux première et respectivement deuxième séries. Les cellules de stationnement sont agencées à chevauchement mutuel avec emboîtement des cellules adjacentes, le dispositif étant modulaire.

### Arrière-plan de l'invention

Il est bien connu que la circulation urbaine augmente continuellement pour atteindre actuellement des niveaux critiques, surtout dans les grands centres urbains, où les concentrations élevées de voitures provoquent des files impressionnantes. Cela cause une perte de temps importante pour les usagers de la route et finit par constituer une perte économique importante pour la société tout entière.

Afin de faire face à cette situation gênante, un certain nombre d'usagers abandonne la voiture pour la remplacer par un deux-roues, ce qui lui permet de se faufiler entre les voitures. Ce type d'usager se heurte cependant au problème du manque d'équipement dans la plupart des centres urbains ne permettant pas d'accueillir de façon adéquate un grand nombre de deux-roues.

### Etat de la technique

Certes, un grand nombre de lieux et bâtiments publics, tels que des écoles, gares, voire même entreprises, sont équipés d' emplacements réservés pour véhicules "deux-roues", consistant en supports de stationnement du type râtelier à bicyclettes, par exemple, permettant à l'usager de garer et d'attacher son deux-roues. Afin d'éviter le vol de son deux-roues, l'usager peut utiliser un cadenas à verrouiller. Cela n'empêche pas des vols de se produire fréquemment car cette protection peut être neutralisée assez facilement par le malfaiteur. Le problème de sécurité reste donc posé.

A cela s'ajoute l'inconvénient qu'avec des dispositifs de stationnement de ce type, les deux-roues ne sont bien souvent pas disposés de façon ordonnée, ce qui donne un aspect général désordonné à la zone de stationnement. De plus, les deux-roues sont retirés quelquefois brusquement de leur emplacement, ce qui peut occasionner des griffes et autres dégâts aux deux-roues avoisinants. Ces inconvénients n'inciteront pas l'usager hésitant à se décider en faveur de l'usage d'un deux-roues et d'abandonner sa voiture, de sorte que le problème des files susmentionné continuera de se poser.

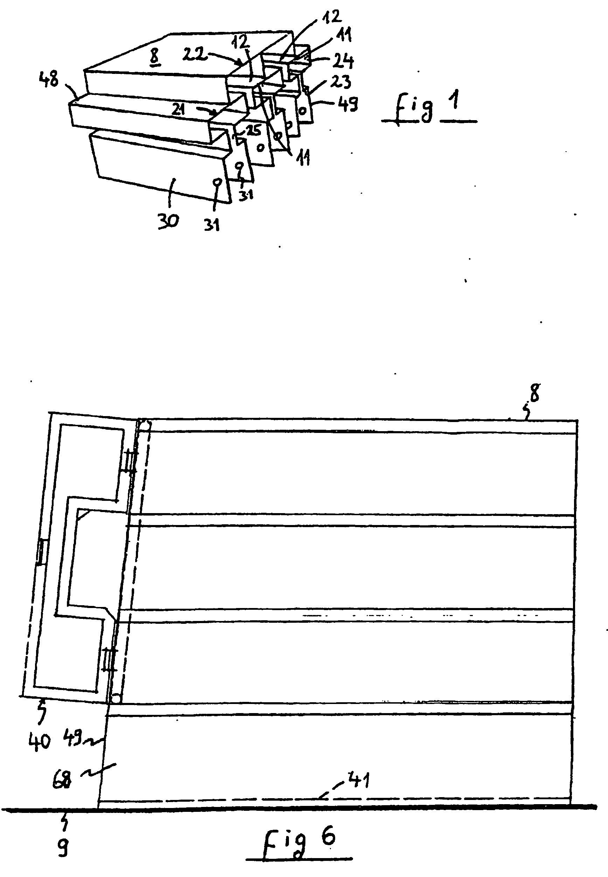

Il est connu du document DE-U-94 14 993 un dispositif de stationnement pour cycles analogue à celui indiqué en préambule ci-dessus comportant deux séries de cellules, dans lequel toutefois les cellules de la série basse présentent une seule section élargie en saillie par rapport à une section étroite à laquelle elles sont rattachées. Ainsi, l'emboîtement est assuré dans le mode de réalisation ici par une seule section élargie, notamment dans le cas des cellules de la série inférieure du dispositif. En outre, les cellules de la série basse présentent une forme différente de celles de la série haute dans le cas de deux séries de cellules superposées tel qu'illustré à la figure 1. Ceci implique notamment que les cellules de la série supérieure et de la série inférieure respectivement ne sont pas mutuellement interchangeables. De plus, dans l'agencement précité à deux séries de cellules superposées, il y a une perte d'espace entre les sections élargies des cellules de la série supérieure, ce qui augmente l'encombrement global du dispositif de stationnement pour cycle dans son ensemble.

Quant au document DE 41 26 797 un dispositif de stationnement y est divulgué dans lequel les première et deuxième séries de cellules sont superposées, nécessitant en outre une cage d'escaliers pour la série de cellules supérieures. Ce dispositif de stationnement est donc fort encombrant et requiert des moyens d'accès supplémentaires qui ne font qu'augmenter davantage encore l'encombrement global du dispositif.

Le document DE 295 20 536 U divulgue quant à lui un dispositif de stationnement de cycles dans lequel la rangée inférieure de cellules ne présente aucune section élargie, tout comme dans le document précédent. Ainsi, l'encombrement global du dispositif de stationnement pour cycles s'en trouve sensiblement augmenté.

Ainsi, des dispositifs de stationnement de cycles de type fermé existent certes, mais ceux décrits dans les trois documents précités présentent tous un inconvénient de structure consistant en un emboîtement seulement partiel voire inexistant des cellules de stationnement entre elles, d'une part, et un encombrement excessif, d'autre part.

### But de l'invention

La présente invention vise à remédier aux inconvénients précités.

### Exposé de l'invention

Les mesures proposées à cette fin sont définies dans la revendication principale. Ainsi, le dispositif de stationnement proposé selon l'invention est remarquable en ce que chaque cellule des première et deuxième séries de cellules de stationnement présente au moins deux sections élargies en saillie par rapport à au moins une section étroite à laquelle elles sont rattachées, lesdites sections élargies d'une cellule pouvant s'emboîter avec les sections élargies correspondantes des cellules adjacentes à celle-ci.

Grâce aux mesures définies dans la revendication 1, on obtient un moyen de stationnement pour deux-roues efficace tant sur le plan de l'emboîtement mutuel entre les cellules de la série supérieure et de la série inférieure respectivement que sur celui de l'encombrement, qui est réduit à un minimum grâce à l'interpénétration caractéristique selon la présente invention des cellules des première et deuxième séries respectivement inférieure et supérieure. De plus, grâce au dispositif de stationnement proposé selon l'invention, on obtient une parfaite interchangeabilité des cellules tant des séries supérieures que des séries inférieures, ce qui en facilite la maintenance tout en permettant des coûts de production optimaux grâce à la modularité desdites cellules. En outre, le double emboîtement des cellules proposé selon l'invention assure une excellente stabilité à l'ensemble conférée grâce à la double interpénétration mutuelle des cellules des séries supérieures et inférieures de cellules, tout en conférant un aspect net et ordonné à l'environnement urbain, en combinaison avec la préservation des deux-roues contre les intempéries, les manipulations brusques ou maladroites lors du stationnement et le vandalisme, et la protection contre le vol.

D'autres particularités sont définies dans les sous-revendications. Les avantages résultant des mesures additionnelles ainsi proposées sont exposés dans la description donnée ci-après de quelques modes de réalisation exemplaires d'un dispositif de stationnement pour deux-roues selon l'invention, laquelle est illustrée à l'aide des dessins annexés.

### Brève description des dessins

La figure 1 illustre une vue en perspective d'un dispositif de stationnement selon l'invention comportant quelques modules;
La figure 2 illustre une vue schématique d'une variante du dispositif selon la figure 1;
La figure 3 illustre une vue analogue à la figure 2 d'une autre variante du dispositif selon l'invention;
La figure 4 illustre une vue analogue à la figure 2 d'une autre variante encore du dispositif selon l'invention;
La figure 5 illustre une vue en perspective du dispositif selon la figure 4;
La figure 6 illustre une vue en coupe latérale du dispositif représenté sur la figure 4 avec une porte ouverte;
Les figures 7 et 8 illustrent des variantes de schémas de fonctionnement de porte du dispositif de stationnement;
La figure 9 illustre un agencement particulier de cellules pour un double dispositif de stationnement;
La figure 10 illustre une vue en plan schématique d'un autre agencement de dispositifs de stationnement multiples.

### Description

Le dispositif de stationnement décrit ci-après se rapporte de façon générale à des deux-roues, le cas échéant même à des véhicules à trois roues. A des fins de clarté toutefois, la description donnée ici sera principalement axée sur le cas particulier des vélos ou bicyclettes.

Le dispositif de stationnement 1 illustré sur la figure 1 est constitué d'une série de cellules 11,12 se rattachant mutuellement dans un alignement. Chaque cellule forme un compartiment de rangement individuel prévu pour recevoir une bicyclette 2. Les cellules sont avantageusement entièrement fermées de façon à conférer une protection à la bicyclette. Une ouverture d'accès est néanmoins prévue permettant d'introduire la bicyclette dans la cellule. On obtient ainsi un casier ou box pour bicyclette. Des orifices 31 sont avantageusement prévus dans les parois des cellules de façon à permettre une ventilation à l'intérieur des cellules. Ainsi, les bicyclettes en stationnement protégé sont à l'abri tant des intempéries que des voleurs.

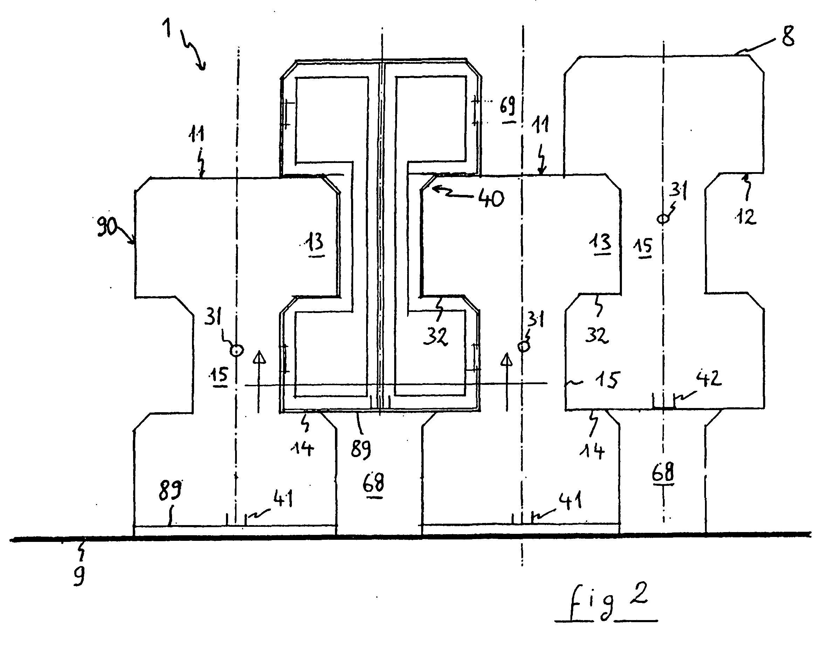

Les cellules 11,12 sont remarquablement agencées à chevauchement mutuel, de façon à être disposées selon deux séries de cellules s'interpénétrant mutuellement. Ainsi, chaque cellule 11 d'une première série est entourée de cellules 12 appartenant à l'autre série, les cellules étant ainsi disposées en décalage mutuel selon un schéma d'alternance de premières et respectivement deuxièmes cellules, comme illustré sur la figure 2.

Chaque cellule présente une section étroite 15 formant l'âme de la cellule et se terminant à chaque extrémité par des sections élargies 13 et 14 faisant saillie par rapport à celle-ci 15. Les sections en saillie des premières cellules sont prévues de façon à s'emboîter entre les sections en saillie des deuxièmes cellules adjacentes. Grâce à cet agencement particulier, on obtient une capacité de stationnement par unité de surface occupée sensiblement augmentée.

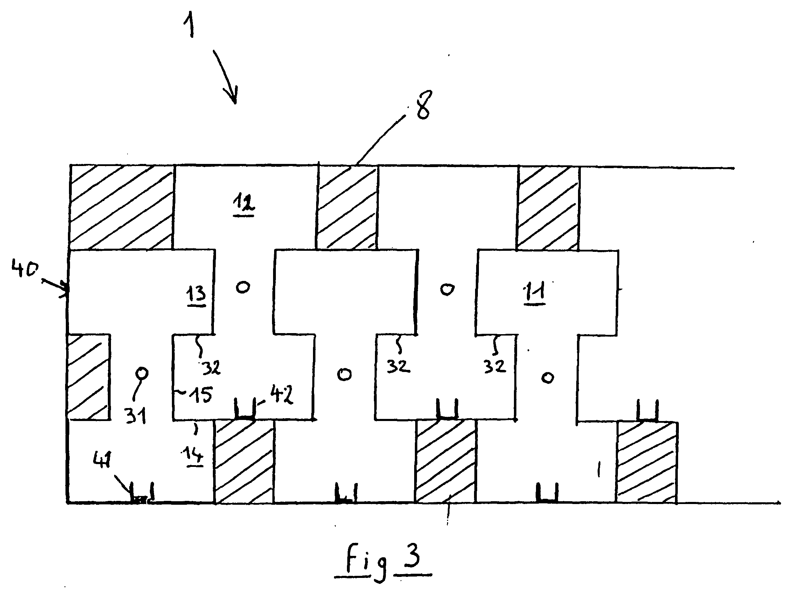

Les cellules telles qu'illustrées présentent ainsi avantageusement une section profilée sensiblement en forme de I, où chaque cellule ou compartiment présente une section de base et de sommet élargies se rattachant chacune à la section centrale plus étroite. Cette configuration des cellules est particulièrement bien adaptée à celle des bicyclettes comme visible sur la figure 3. En effet, les sections élargies 13,14 conviennent parfaitement aux parties de la bicyclette faisant saillie latéralement, telles que le guidon 3 côté supérieur et les pédales 4 côté inférieur respectivement. La partie étroite 15, quant à elle, convient parfaitement comme moyen de guidage pour le cadre proprement dit 5 de la bicyclette.

La profondeur, ainsi que la hauteur des cellules dépasse au moins légèrement la longueur de la bicyclette standard. Ainsi, grâce au dimensionnement approprié des cellules, on obtient un espace de stationnement particulièrement indiqué pour un stationnement ou rangement des bicyclettes. Les parois 30 des cellules dans leur ensemble entourent ainsi les différentes parties de la bicyclette, de façon à pouvoir former, le cas échéant, une surface de support pour celles-ci. Cette structure spécifique des cellules favorise le maintien en bon état de conservation des bicyclettes où le risque de dégradation des bicyclettes est sensiblement réduit.

De plus, grâce à l'effet conjugué de la forme des cellules à l'ordonnance spécifique de celles-ci 11,12 en parallèle l'une avec l'autre, il n'y a aucune perte de place due à une disposition anarchique des bicyclettes. L'économie de place réalisée sera encore plus grande avec l'agencement à chevauchement des cellules précité.

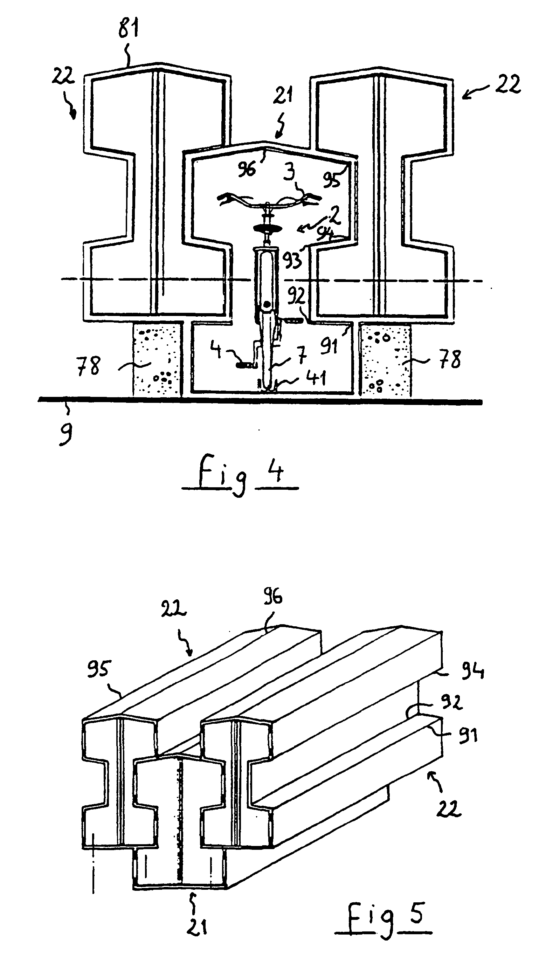

Les cellules 11,12 présentent avantageusement toutes la même section en 1 comme illustré sur la figure 2 formant une légère variante du dispositif à cellules 21,22 selon la figure 4, qui est davantage adapté à l'usage pour les motocyclettes, notamment par les dimensions plus importantes en largeur des différentes sections. L'avantage d'une réalisation sensiblement identique des cellules 11,12 réside dans le fait que cela procure une standardisation des cellules, ce qui permet un processus de fabrication simplifié permettant une automatisation plus aisée.

En outre, cela permet une meilleure interchangeabilité des cellules dans une conception modulaire du dispositif de stationnement dans son ensemble. La modularité du dispositif facilite le démontage et le réassemblage sur un autre site selon les besoins du moment. Cela favorise une utilisation intensive de ces dispositifs de stationnement à l'occasion de manifestations limitées dans le temps réunissant un grand nombre de personnes telles que des concerts, festivals en plein air, grandes expositions et analogues.

La modularité des cellules offre également l'avantage important de pouvoir adapter le nombre de cellules disponibles sur un site en fonction des nécessités du moment. La longueur du dispositif de stationnement est donc modulable à tout moment. De plus, les cellules sont pliables et portables, ce qui en favorise davantage encore l'utilisation en de telles occasions.

Comme montré sur la figure 3, des espaces résiduels 68,69 sont disponibles entre les sections élargies 13,14 de cellules successives appartenant à la même rangée inférieure ou supérieure. Ces espaces 68,69 peuvent être exploités utilement comme espace de rangement additionnel pouvant être fermé soit de concert avec la cellule à laquelle il se rattache, soit séparément de celle-ci. Dans ce dernier cas, on prévoit un moyen de fermeture additionnel correspondant. Cet espace, de préférence le supérieur 69, peut servir par exemple pour le rangement d'un casque, l'usage du casque se généralisant de plus en plus, y compris pour les cyclistes.

Les espaces additionnels inférieurs 68 seront affectés de préférence à des blocs de béton 78 montrés sur la figure 4 et auxquels les cellules sont fixées par des moyens de fixation appropriés tels que des vis d'ancrage. Ceci permet un ancrage au sol 9 du dispositif de stationnement 1, ce qui en augmente considérablement la stabilité.

La structure d'ensemble du dispositif de stationnement est autoportante. Afin de garantir la stabilité requise, le nombre de cellules de tout dispositif de stationnement sera impair, comme visible sur les figures, ce qui confère une configuration symétrique en équilibre stable.

Les cellules sont réalisées à partir de tôle galvanisée, par exemple, laquelle est repliée selon des lignes de pliage 91,92,93,94,95,96 spécifiques comme illustré sur les figures. Ces zones de pliage caractéristiques avec l'emboîtement des cellules successives confèrent une bonne stabilité à l'ensemble. Cependant, l'ancrage précité constitue un facteur de stabilité supplémentaire.

Les parois 30 constituant chaque cellule peuvent être réalisées avec des rebords qui se recouvrent, par lesquels les parois peuvent être assemblées mutuellement en un ensemble par vis par exemple.

Afin d'améliorer la commodité d'utilisation du dispositif de stationnement, chaque cellule est pourvue à sa base d'un moyen de guidage 41,42, de préférence centralement selon la direction longitudinale de la cellule, prévu pour recevoir la bicyclette 2. Ce moyen de guidage peut être formé par un rail, par exemple, ou encore par une zone médiane repliée à cette fin de la tôle de base 89, ce qui assure une disposition très maniable et automatiquement médiane de la bicyclette.

Un moyen de retenue est avantageusement prévu dans le moyen de guidage 41,42 à hauteur de l'ouverture d'entrée 90 de chaque cellule. Celui-ci, qui est de préférence encliquetable, permet de maintenir en place la bicyclette après son introduction dans la cellule. Ce moyen de retenue est particulièrement indiqué lorsque le moyen de guidage 42 précité possède une certaine pente α, comme c'est le cas pour les cellules 12,22 de la série supérieure facilitant ainsi l'introduction des bicyclettes dans les cellules supérieures, comme visible sur la figure 9. Dans les cellules de la série inférieure 1.1,21 , lesdits moyens de guidage 41 s'étendent le long de la base 89 de celles-ci.

La figure 9 montre une variante du dispositif de stationnement dans laquelle celui-ci présente un épaulement 44 en son fond. L' épaulement est réalise de telle façon qu'il procure une surface de support 45. Cette surface de support 45 est avantageusement plate et horizontale. Selon sa hauteur par rapport au sol sur lequel repose le dispositif 1, cette surface de support 45 peut servir de banc permettant de s'asseoir ou de support pour des bacs à fleurs. Ainsi, l'ensemble peut être intégré parfaitement dans le milieu urbain dans lequel il est implanté. Cela résulte également de la pureté des lignes du dispositif permettant une intégration harmonieuse au mobilier urbain actuel.

Afin d'assurer une évacuation régulière de l'eau de pluie, la surface de sommet 8 du dispositif de stationnement est légèrement inclinée. Lorsque les cellules présentent l'épaulement précité, l'inclinaison est tournée vers celui-ci, la surface de support 45 étant alors également inclinée légèrement vers l'extérieur pour éviter toute stagnation d'eau sur ces surfaces. Sinon, l'inclinaison 81 partira de l'axe longitudinal du sommet vers les côtés latéraux, comme visible sur les figures 3 et 4.

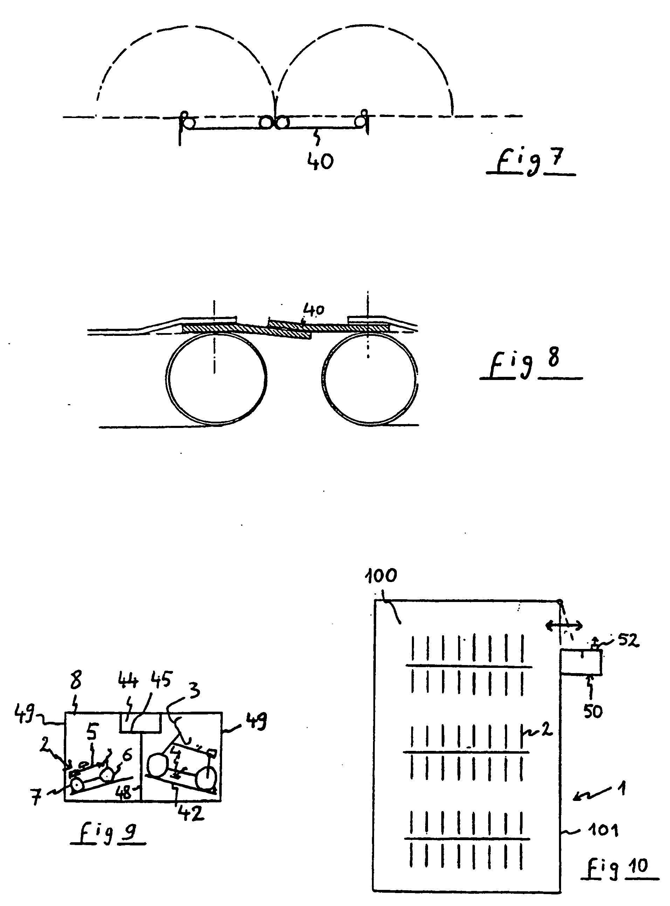

De préférence, les cellules sont munies d'un moyen de fermeture 40 du type porte permettant une fermeture individuelle de chaque cellule. La forme de la porte 40 correspond sensiblement à celle de la section d'ouverture d'accès 90 de la cellule. Les portes sont avantageusement agencées à coulissement, plus particulièrement selon la direction de la flèche F dans le plan d'élévation du dispositif de stationnement. Cela occasionne un encombrement minimal et nécessite ainsi un espace minimal pour l'ouverture des portes des cellules, ce qui s'avère particulièrement avantageux dans le cas d'une disposition en grille 100 de dispositifs de stationnement 1 multiples tels que représentés sur la figure 10.

La figure 6 montre une variante d'exécution dans laquelle la surface d'accès 49 de la cellule est inclinée vers l'arrière. Ceci offre l'avantage que la porte d'accès 40 se refermera d'elle-même après avoir été ouverte, sous l'effet de la gravité. La porte atterrit dans un dispositif de fermeture formant serrure qui se verrouillera. Il ne se déverrouillera ensuite qu'après activation par une carte par l'utilisateur suivant permettant à partir de cet instant seulement la réouverture de la porte.

Les portes pivotantes ou même basculantes peuvent cependant également être utilisées comme visible sur les figures 7 et 8. Les portes pivotantes sont fixées sur charnières à un côté correspondant de l'ouverture d'accès de chaque cellule.

Les portes basculantes sont rattachées par-dessus au côté supérieur de chaque cellule.

Les moyens de fermeture précités 40 procurent au dispositif de stationnement, outre sa fonction de bonne préservation de la bicyclette qu'il renferme, également une sécurité efficace contre le vandalisme et le vol.

La sécurité contre le vol dans une aire de stationnement peut encore être considérablement renforcée par l'incorporation d'une unité de contrôle 50 à l'entrée de l'aire de stationnement 100 précitée, dans laquelle sont aménagés des dispositifs de stationnement 1. L'aire de stationnement sera dans ce cas clôturée par une enceinte 101. Ladite unité de contrôle permet une commande individuelle des moyens de fermeture précités par laquelle l'ouverture de ceux-ci peut être commandée sélectivement.

Les moyens de fermeture 40 peuvent être actionnés par des moyens de commande prévus à cette fin, tels que des petits moteurs qui sont logés dans les espaces disponibles 68,69 dans le dispositif de stationnement. Chaque porte est actionnée par son moteur, qui, quant à lui, est commandé par l'unité centrale. Ainsi, le verrouillage des portes peut se faire par commande à puce.

L'unité centrale comprend un processeur et elle peut être commandée directement par le cycliste. Pour la rendre plus conviviale, celle-ci est munie d'un écran d'affichage qui peut fournir toute sorte d'information utile à l'utilisateur, comme par exemple quelle cellule de stationnement lui est destinée. Elle est également avantageusement munie d'un clavier de programmation et d'un lecteur de carte, ainsi qu'une alimentation. Un modem est prévu sur le module de la carte à puce destinée à permettre la communication avec l'organisme financier par lequel le paiement sera effectué. Un deuxième modem peut encore être prévu pour éventuellement surveiller le système à distance et intervenir en cas de nécessité.

Le fonctionnement du dispositif de stationnement est exposé ci-après. Lorsque le cycliste souhaite garer sa bicyclette, il se positionne devant un box ou une cellule disponible et il commande l'ouverture de celle-ci au moyen d'une carte à puce. Il gare ensuite sa bicyclette et range, le cas échéant, d'autres effets personnels 99 dans le ou les espaces prévus à cet effet. Ensuite, il commande la fermeture de la ou des portes et il retire sa carte à puce. Lorsque le cycliste désire récupérer sa bicyclette, il commande l'ouverture de la porte de la cellule appropriée au moyen de sa carte à puce. La carte est débitée du montant correspondant à la durée d'occupation de la cellule de façon analogue à la procédure suivie pour les parkings de voitures. Le cycliste retire sa bicyclette et ses effets de la cellule, il referme la porte et après seulement il pourra retirer sa carte du dispositif de stationnement. Par conséquent, les cellules sont toujours fermées, qu'elles soient occupées ou vides. Il résulte de ceci que les actes de vandalisme sont fortement découragés, du moins à l'intérieur des cellules.

Un mode exemplaire de fonctionnement du dispositif en tant que système plus poussé est donné ci-après. Le processeur de l'unité centrale (CPU) dirige et suit toutes les opérations. Le gérant d'un site de stationnement pourra effectuer des actions prioritaires et nécessaires au moyen d'une carte de gérant qui lui est propre et pour laquelle il est la seule personne autorisée, ou d'un PC avec logiciel approprié. Les actions prioritaires sont définies comme étant : l'ouverture des box ou cellules pour contrôler son contenu; l'aide du cycliste en perte de sa carte; recherche des cellules en occupation dépassant un seuil de consigne; mise hors service ou en service de cellules.

A ces actions prioritaires et nécessaires s'ajoutent les actions optionnelles indiquées ci-après : établissement de statistiques quant au taux d'occupation des cellules permettant d'évaluer la nécessité d'une augmentation (ou réduction) de capacité de stationnement; réservation de cellule(s) pour un client du type entreprise comme pour les voitures actuellement; préréglage du temps d'attente pour la fermeture de la porte de cellule ou de l'ouverture ultérieure de celle-ci après fermeture.

Les manipulations dans le chef de l'utilisateur-cycliste résultant en une action du système peuvent consister en : garer une ou plusieurs bicyclettes dans un nombre correspondant de cellules; rajouter un bagage 99 ultérieurement dans la cellule avec possibilité pour l'utilisateur-cycliste de choisir la cellule s'il en occupe plusieurs; retrait de la bicyclette avec même possibilité de choix accompagné de l'établissement du décompte avec retenue en cas de solde insuffisant sur la carte.

A l'état de repos du système, les cellules sont toutes fermées. A l'état de fermeture complète de la porte, un contact sera établi et un signal sera envoyé vers l'unité centrale. Lorsque celle-ci lit ce signal, un message de disponibilité de la cellule du type "libre" s'affichera sur la porte ou sur tout autre support d'information utile.

## Revendications

1. Dispositif de stationnement pour deux-roues comprenant au moins une série d'éléments de stationnement, dans lequel ladite série d'éléments est constituée d'éléments de stationnement mutuellement adjacents (11; 12; 21; 22), chaque élément de stationnement comprenant un espace barré (40) prévu pour recevoir individuellement un deux-roues (2) unique par une ouverture d'accès (90), de façon à former des cellules de stationnement individuelles pour les deux-roues précités qui soient mutuellement isolées, un moyen de fermeture (40) étant prévu pour chaque cellule permettant de barrer l'espace que celle-ci renferme, dans lequel les cellules de stationnement précitées sont disposées suivant une première et une deuxième série d'éléments de stationnement mutuellement décalées (89) avec agencement alterné des éléments (11; 21; resp. 12, 22) appartenant aux première et respectivement deuxième séries, les cellules de stationnement étant agencées à chevauchement mutuel avec emboîtement des cellules adjacentes, le dispositif étant modulaire, **caractérisé en ce que** chaque cellule des première et deuxième séries de cellules de stationnement présente au moins deux sections élargies (13, 14) en saillie par rapport à au moins une section étroite (15) à laquelle elles sont rattachées, lesdites sections élargies d'une cellule pouvant s'emboîter avec les sections élargies correspondantes des cellules adjacentes à celle-ci.

2. Dispositif de stationnement suivant la revendication 1 **caractérisé en ce que** chaque cellule de stationnement présente une section transversale en forme de I.

3. Dispositif de stationnement suivant l'une des revendications 1 ou 2, **caractérisé en ce qu'**il présente, entre des cellules adjacentes, des espaces résiduels (68,69).

4. Dispositif de stationnement suivant la revendication 3, lorsqu'elle dépend de la revendication 2, **caractérisé en ce que** les espaces résiduels inférieurs (68) sont occupés au moins partiellement par des blocs de lestage (78), lesquels sont disposés au moins à hauteur des extrémités longitudinales des cellules, de façon à permettre de stabiliser le dispositif de stationnement (1).

5. Dispositif de stationnement suivant la revendication 4, **caractérisé en ce que** des moyens de fixation sont prévus pour ancrer le dispositif de stationnement aux blocs de lestage.

6. Dispositif de stationnement suivant l'une des revendications 4 ou 5, **caractérisé en ce que** les blocs de lestage précités sont constitués de béton.

7. Dispositif de stationnement suivant la revendication 3. lorsqu'elle dépend de la revendication 2, **caractérisé en ce que** les espaces résiduels supérieurs (69) sont affectés au rangement d'effets accessoires de l'utilisateur de la cellule correspondante au principal, laquelle cellule correspondante est située en dessous de l'espace résiduel supérieur concerné.

8. Dispositif suivant l'une des revendications 1 à 7, **caractérisé en ce que** l'écart (87) entre les deux séries de cellules precitées ne dépasse pas un ordre de grandeur de rayon de l'une des roues (7) du deux-roues.

9. Dispositif suivant l'une des revendications précédentes, **caractérisé en ce que** le moyen de fermeture (40) précité est formé par une porte verrouillable, laquelle ne peut être ouverte que par des moyens d'accès autorisés.

10. Dispositif suivant la revendication 9, **caractérisé en ce que** la porte est agencée à pivotement sur l'ouverture d'accès (90) à ta cellule.

11. Dispositif suivant la revendication 9, **caractérisé en ce que** la porte est agencée à coulissement selon une direction parallèle au plan d'ouverture d'accès (90) à la cellule.

12. Dispositif suivant l'une des revendications 3 à 11, **caractérisé en ce que** les espaces résiduels précités (68,69) et chaque cellule (11,12) correspondante proprement dite sont verrouillables sélectivement l'un par rapport à l'autre.

13. Dispositif suivant l'une des revendications 9 à 12, **caractérisé en ce que** les portes sont commandées individuellement à partir d'une unité de commande centrale (50).

14. Dispositif suivant l'une des revendications 9 à 13, **caractérisé en ce que** les portes sont commandées individuellement par l'utilisateur lorsqu'il dispose du moyen d'accès autorisé précité.

15. Dispositif suivant l'une des revendications 9 ou 14, **caractérisé en ce que** le moyen d'accès autorisé consiste en une carte d'accès validée par une personne autorisée.

16. Dispositif suivant l'une des revendications 13 à 15, **caractérisé en ce que** ladite unité centrale est maniable directement par l'utilisateur.

17. Dispositif suivant l'une des revendications 13 à 16, **caractérisé en ce que** ladite unité de commande (50) indique à l'utilisateur la cellule qui lui est attribuée avec ouverture automatique du moyen de fermeture approprié (40).

18. Dispositif suivant l'une des revendications précédentes, **caractérisé en ce que** chaque cellule de stationnement (11,12;21,22) est pourvue d'un moyen de guidage (41,42,43) qui est agencé longitudinalement pratiquement au centre de ta base (89) de la cellule, de façon à permettre une introduction guidée du deux-roues dans la cellule.

19. Dispositif suivant la revendication 18, **caractérisé en ce que** le moyen de guidage (41) des premières cellules (11) est sensiblement parallèle à la base, tandis que ceux (42) des deuxièmes cellules (12) présente une certaine pente (α).

20. Dispositif suivant l'une des revendications précédentes, **caractérisé en ce que** le côté arrière (48) de celui-ci présente un épaulement (44) formant une surface de support (45).

21. Dispositif suivant l'une des revendications précédentes, **caractérisé en ce que** les surfaces extérieures de ses parois (30) sont traitées pour servir de support d'information.

22. Dispositif suivant la revendication précédente, **caractérisé en ce que** les surfaces extérieures précitées sont enduites d'une couche de produit anti-graffiti.

23. Dispositif suivant l'une des revendications précédentes, **caractérisé en ce qu'**il est modulaire.

24. Dispositif suivant l'une des revendications précédentes, **caractérisé en ce qu'**il est pliable et/ou portable.

25. Dispositif suivant l'une quelconque des revendications précédentes, **caractérisé en ce que** les ouvertures d'accès (90) et les moyens de fermeture (40) précités sont tous agencés d'un même côté du dispositif dans son ensemble.

26. Dispositif suivant l'une quelconque des revendications précédentes, **caractérisé en ce que** les cellules de stationnement (11; 12; 21; 22) sont toutes agencées en alignement droit.

27. Dispositif suivant l'une quelconque des revendications précédentes, **caractérisé en ce que** les cellules de stationnement précitées (11; 12; 21; 22) sont agencées pour recevoir les bicyclettes à l'endroit.

## Patentansprüche

1. Parkvorrichtung für Zweiräder, mit wenigstens einer Reihe von Parkelementen, bei der die Elementenreihe gebildet wird aus zueinander benachbarten Parkelementen (11; 12; 21; 22), wobei ein jedes Parkelement einen gesperrten Raum (40) aufweist, der vorgesehen ist, um individuell ein einzelnes Zweirad (2) aufzunehmen, über eine Zutrittsöffnung (90), derart, dass individuelle Parkzellen für die Zweiräder gebildet werden, die gegeneinander isoliert sind, einer Schließeinrichtung (40), die vorgesehen ist für eine jede Zelle, die ermöglicht den Raum zu sperren, den sie selbst einschließt, in dem die Parkzellen gemäß einer ersten und einer zweiten Parkelementreihe angeordnet sind, die gegeneinander mit einer abwechselnden Anordnung der Elemente (11; 21; bzw. 12, 22) versetzt sind, die zu den ersten und entsprechend zweiten Reihen gehören, wobei die Parkzellen gegenseitig überlappend angeordnet sind, mit einer Schachtelung der benachbarten Zellen, wobei die Vorrichtung modulartig ist, **dadurch gekennzeichnet, dass** jede Zelle der ersten und zweiten Reihen von Parkzellen wenigstens zwei verbreiterte Abschnitte (13, 14) aufweist, die bezüglich wenigstens einem Querschnitt (15) vorspringen, an den sie angebracht sind, wobei die verbreiteten Abschnitte einer Zelle mit den entsprechenden verbreiterten Abschnitten der zu ihr benachbarten Zellen überlappen können.

2. Parkvorrichtung nach Anspruch 1; **dadurch gekennzeichnet, dass** jede Parkzelle einen Querschnitt in Form eines I aufweisen.

3. Parkvorrichtung nach Anspruch 1 oder 2, **dadurch gekennzeichnet, dass** sie zwischen den benachbarten Zellen Verlusträume (68, 69) aufweist.

4. Parkvorrichtung nach Anspruch 3, wenn dieser von Anspruch 2 abhängt, **dadurch gekennzeichnet, dass** die unteren verlorenen Räume (68) wenigstens teilweise durch Beschwerungsblöcke (78) besetzt sind, die wenigstens auf der Höhe der Längsenden der Zellen angeordnet, sind, derart, dass sie ermöglichen, die Parkvorrichtung (1) zu stabilisieren.

5. Parkvorrichtung nach Anspruch 4, **dadurch gekennzeichnet, dass** die Befestigungseinrichtung vorgesehen ist, die Parkvorrichtung an den Beschwerungsblöcken zu veverankern.

6. Parkvorrichtung nach Anspruch 4 oder 5, **dadurch gekennzeichnet, dass** die vorgenannten Beschwerungsblöcke aus Beton gebildet sind.

7. Parkvorrichtung nach Anspruch 3 abhängend von Anspruch 2, **dadurch gekennzeichnet, dass** die oberen verlorenen Räume (69) von zusätzlichen Aufräumeffekten des Benutzers der Zelle beaufschlagt sind entsprechend der Hauptzelle besetzt, wobei die entsprechende Zelle unterhalb des betreffenden oberen verlorenen Raumes angeordnet ist.

8. Vorrichtung nach einem der Ansprüche 1 bis 7, **dadurch gekennzeichnet, dass** der Abstand (87) zwischen zwei vorgenannten Zellenreihen eine Radiusgrößenordnung eines der Räder (7) des Zweirads nicht übersteigt.

9. Vorrichtung nach einem der vorhergehenden Ansprüche, **dadurch gekennzeichnet, dass** die Schließeinrichtung (40) durch eine abschließbare Tür gebildet wird, wobei diese nur durch autorisierte Zutrittseinrichtungen geöffnet werden kann.

10. Vorrichtung nach Anspruch 9, **dadurch gekennzeichnet, dass** die Tür schwenkbeweglich an der Zutrittsöffnung (90) zur Zelle angelenkt ist.

11. Vorrichtung nach Anspruch 9, **dadurch gekennzeichnet, dass** die Tür gleitend entlang einer Richtung parallel zur Zutrittsöffnungsebene (90) zur Zelle angelenkt ist.

12. Vorrichtung nach einem der Ansprüche 3 bis 11, **dadurch gekennzeichnet, dass** die vorgenannten verlorenen Räume (68, 69) und jede entsprechende im eigentlichen Sinne Zelle (11, 12) auswählbar gegeneinander verriegelbar sind.

13. Vorrichtung nach einem der Ansprüche 9 bis 12, **dadurch gekennzeichnet, dass** die Türen einzeln ausgehend von einer zentralen Steuereinheit betätigt werden.

14. Vorrichtung nach einem der Ansprüche 9 bis 13, **dadurch gekennzeichnet, dass** die Türen einzeln durch den Benutzer betätigt werden, wenn er über das vorgenannte Mittel zum erlaubten Zugang verfügt.

15. Vorrichtung nach einem der Ansprüche 9 bis 14, **dadurch gekennzeichnet, dass** die Mittel zum erlaubten Zutritt aus einer Zutrittskarte besteht, die durch eine autorisierte Person validiert ist.

16. Vorrichtung nach einem der Ansprüche 13 bis 15, **dadurch gekennzeichnet, dass** die zentrale Einheit direkt durch den Benutzer betätigbar ist.

17. Vorrichtung nach einem der Ansprüche 13 bis 16, **dadurch gekennzeichnet, dass** die Steuereinheit (50) den Benutzer die Zelle angibt, die ihm zugeordnet ist, mit automatischer Öffnung der geeigneten Schließeinrichtung (40).

18. Vorrichtung nach einem der vorhergehenden Ansprüche, **dadurch gekennzeichnet, dass** jede Parkzelle (11, 12; 21, 22) mit einer Füllungseinrichtung (41, 42, 43) versehen ist, die längs und praktisch in der Mitte der Basis (89) der Zelle angelenkt ist, derart, dass sie eine geführte Einführung des Zweirads in die Zelle erlaubt.

19. Vorrichtung nach Anspruch 18, **dadurch gekennzeichnet, dass** die Führungseinrichtung (41) der ersten Zellen (11) im Wesentlichen parallel zur Basis ist, während jene (42) der zweiten Zellen (12) eine gewisse Neigung (α) aufweisen.

20. Vorrichtung nach einem der vorhergehenden Ansprüche, **dadurch gekennzeichnet, dass** die Rückseite (48) von dieser eine Schulter (44) aufweist, die eine Stützfläche (45) bildet.

21. Vorrichtung nach einem der vorhergehenden Ansprüche, **dadurch gekennzeichnet, dass** die Außenflächen ihrer Seitenwände (30) behandelt sind, um als Informationsunterlage zu dienen.

22. Vorrichtung nach dem vorhergehenden Anspruch, **dadurch gekennzeichnet, dass** die vorgenannten Außenseiten mit einer Schicht eines Antigraffitiproduktes bestrichen sind.

23. Vorrichtung nach einem der vorhergehenden Ansprüche, **dadurch gekennzeichnet, dass** sie modular ist.

24. Vorrichtung nach einem der vorhergehenden Ansprüche, **dadurch gekennzeichnet, dass** sie faltbar und/oder tragbar ist.

25. Vorrichtung nach einem der vorhergehenden Ansprüche, **dadurch gekennzeichnet, dass** die Zutrittsöffnungen (90) und die Schließeinrichtungen (40) alle auf derselben Seite der Vorrichtung in seiner Gesamtheit angeordnet sind.

26. Vorrichtung nach einem der vorhergehenden Ansprüche, **dadurch gekennzeichnet, dass** die Parkzellen (11; 12; 21; 22) alle in gerader Ausrichtung angeordnet sind.

27. Vorrichtung nach einem der vorhergehenden Ansprüche, **dadurch gekennzeichnet, dass** die vorgenannten Parkzellen (11; 12; 21; 22) angeordnet sind, um die Fahrräder am Ort aufzunehmen.

## Claims

1. Parking device for two-wheelers comprising at least one series of parking elements, wherein said series of elements is constituted by mutually adjacent parking elements (11; 12; 21; 22), each parking element comprising a closed space (40) provided for receiving individually a single two-wheeler (2), through an access opening (90), so as to form individual parking cells for said two-wheelers that are mutually isolated, wherein a closing means (40) is provided for each cell allowing to close the space enclosed by the latter, wherein said parking cells are arranged in a first series and a second series of parking elements which are mutually shifted (89) with an alternate arrangement of the elements (11; 21; resp. 12, 22) belonging to the first, respectively second series, wherein the parking elements are staggered mutually with the adjacent cells being nested, wherein the device is modular, **characterised in that** each cell of the first and second series of parking cells has at least two widened sections (13, 14) protruding relative to at least one connected narrow section (15), said widened sections of a cell being capable of nesting with the corresponding widened sections of the cells, adjacent thereto.

2. Parking device according to claim 1, **characterised in that** each parking cell has a cross section in the shape of an I.

3. Parking device according to one of the claims 1 or 2, **characterised in that** upper and lower residual spaces (68, 69) are provided between adjacent ones of the parking cells.

4. Parking device according to claim 3, when depending on claim 2, **characterised in that** the lower residual spaces (68) are at least partially occupied by ballast blocks (78), which are arranged at least at a height of longitudinal ends of the cells so as to stabilize the parking device (1).

5. Parking device according to claim 4, **characterised in that** attachment means are provided for fastening the parking device to the ballast blocks.

6. Parking device according to claim 4 or 5, **characterised in that** the ballast blocks are made of concrete.

7. Parking device according to claim 3 when depending on claim 2, **characterised in that** the residual upper spaces (69) are used to stow accessory effects of a user of the parking cell corresponding to the main one, which corresponding cell is located below the related residual upper space.

8. Device according to one of the claims 1 to 7, **characterised in that** the space (87) between both said series of cells does not exceed an order of magnitude of a radius of one of the wheels (7) of the two-wheelers.

9. Device according to one of the preceding claims, **characterised in that** said closing means (40) is formed by a lockable door, which can be opened by authorised access means only.

10. Device according to claim 9, **characterised in that** the door is arranged pivotably at the access opening (90) of the cell.

11. Device according to claim 9, **characterised in that** the door is arranged slidably in a direction parallel to a plane of the access opening (90) to the cell.

12. Device according to one of the claims 3 to 11, **characterised in that** said residual spaces (68, 69) and each corresponding cell (11, 12) itself are mutually selectively lockable.

13. Device according to one of the claims 9 to 12, **characterised in that** the doors are controlled individually from a central control unit (50).

14. Device according to one of the claims 9 to 13, **characterised in that** the doors are controlled individually by the user when the authorised access means is available to him.

15. Device according to one of the claims 9 to 14, **characterised in that** the authorised access means consists in an access card which is validated by an authorised person.

16. Device according to one of the claims 13 to 15, **characterised in that** said central control unit is operable directly by the user.

17. Device according to one of the claims 13 to 16, **characterised in that** said control unit (50) indicates to the user the cell which is assigned to him with automatic opening of the suitable closing means (40).

18. Device according to one of the preceding claims, **characterised in that** each parking cells (11, 12; 21, 22) has a guiding means (41, 42, 43) arranged longitudinally substantially at the centre of the base (89) of the cell so as to allow a guided introduction of the two-wheeler in the cell.

19. Device according to claim 18, **characterised in that** the guiding means (41) of the first cells (11) is essentially parallel to a base, and the guiding means (42) of the second cells (12) has a slope (α).

20. Device according to one of the preceding claims, **characterised in that** the rear side (48) thereof has a shoulder (44) forming a support surface (45).

21. Device according to one of the preceding claims, **characterised in that** the outside surfaces of its walls (30) are treated to serve as information support.

22. Device according to the preceding claim, **characterised in that** the outer surfaces are coated with a layer of anti-graffiti product.

23. Device according to one of the preceding claims, **characterised in that** it is modular.

24. Device according to one of the preceding claims, **characterised in that** the parking device is pliable and/or portable.

25. Device according to any one of the preceding claims, **characterised in that** the access openings (90) and said closing means (40) are all arranged at the same side of the device as a whole.

26. Device according to any one of the preceding claims, **characterised in that** the parking cells (11; 12; 21; 22) are all arranged in a straight alignment.

27. Device according to any one of the preceding claims, **characterised in that** the parking cells (11; 12; 21; 22) are arranged to receive the bicycles upright.
